Europäisches Patentamt

European Patent Office

Office européen des brevets

(19)

(11) Numéro de publication : **0 100 268**
**B1**

# (12) FASCICULE DE BREVET EUROPÉEN

(45) Date de publication du fascicule du brevet :
**05.03.86**

(21) Numéro de dépôt : **83401457.3**

(22) Date de dépôt : **13.07.83**

(51) Int. Cl.⁴ : **C 01 B 33/02**

(54) **Silicium pur, en poudre dense, et son procédé de préparation.**

(30) Priorité : **26.07.82 FR 8212968**

(43) Date de publication de la demande :
**08.02.84 Bulletin 84/06**

(45) Mention de la délivrance du brevet :
**05.03.86 Bulletin 86/10**

(84) Etats contractants désignés :
**BE DE FR GB IT NL**

(56) Documents cités :
DE-B- 1 216 842
FR-A- 1 236 740
US-A- 3 014 791
US-A- 4 340 574
CHEMICAL ABSTRACTS, vol. 96, no. 20, 17 mai 1982,
page 135, no. 164975e, Columbus, Ohio, USA
CHEMICAL ABSTRACTS, vol. 64, no. 13, 20 juin 1966,
colonne 18927g, Columbus, Ohio, USA, J. JERNE-
JCIC et al.: "Synthesis and thermal decomposition of
monosilane"
THE CONFERENCE RECORD OF THE FIFTEENTH
IEEE PHOTOVOLTAIC SPECIALISTS CONFERENCE,
12-15 mai 1981, Kissimmee, Florida, pages 565-568,
IEEE, New York, USA, J.R. LAY et al.: "Silane pyrolysis in a free-space reactor"

(73) Titulaire : **RHONE-POULENC SPECIALITES CHIMI-
QUES**
**"Les Miroirs" 18, Avenue d'Alsace**
**F-92400 Courbevoie (FR)**

(72) Inventeur : **Boudot, Bernard**
**146 Boulevard Diderot**
**F-75012 Paris (FR)**
Inventeur : **Nataf, Philippe**
**Tour de Mars A 35 Quai de Grenelle**
**F-75015 Paris (FR)**

(74) Mandataire : **Savina, Jacques et al**
**RHONE-POULENC RECHERCHES Service Brevets**
**Chimie et Polymères 25, quai Paul Doumer**
**F-92408 Courbevoie Cédex (FR)**

Jouve, 18, rue St-Denis, 75001 Paris, France

**0 100 268**

**Description**

La présente invention concerne un silicium dense de haute pureté et un procédé de préparation de ce produit.

On sait que l'on peut préparer du silicium de haute pureté (c'est-à-dire du silicium utilisable pour la production des semi-conducteurs) en décomposant du silane $SiH_4$ par élévation de température. Cette décomposition a été spécialement étudiée à une température élevée, c'est-à-dire à température supérieure à 700 °C environ. On obtient alors une poudre fine de silicium pur dont la densité est très faible (de l'ordre de 0,2) (The Conference Record of the Fifteenth IEEE photovoltaic specialists conference, 12-15 mai 1981, pages 565-568). Par ailleurs, il est connu d'après C.A. Vol. 96 n° 20, 1982, page 135, 164 975 e de préparer du silicium amorphe dont la taille des particules est comprise entre 0,1 et 1 micron par décomposition du silane sur un lit fluide constitué de particules de silicium. Dans la présente demande, le mot « densité » doit être entendu comme signifiant « densité apparente » après récupération déterminée en suivant les normes en vigueur pour la détermination de cette densité apparente.

On connaît également du document « Chemical Abstracts, vol. 96, numéro 20, 17 mai 1982, page 135, numéro 164 975 e, Columbus, Ohio, USA (1) un procédé pour la préparation de poudre de silicium par décomposition du silane à une température comprise entre 300 et 750 °C, en particulier à titre d'exemple à une température de 600 °C.

Il a été trouvé et c'est là l'objet de la présente invention que, lorsque la décomposition thermique du silane était effectuée à une température comprise entre 500 et 700 °C, de préférence entre 500 et 600 °C, on obtenait une poudre de silicium non amorphe aux rayons X ayant une densité supérieure, c'est-à-dire une densité au moins égale à environ 0,6 et généralement comprise entre 0,6 et 0,8.

La présente invention concerne donc en tant que produit nouveau une poudre de silicium, de haute pureté non amorphe aux rayons X, caractérisée en ce qu'elle présente une densité supérieure à environ 0,6 ; elle concerne également un procédé de préparation dudit produit nouveau, procédé dans lequel ladite poudre est produite par décomposition thermique d'un silane, caractérisé en ce que ladite décomposition est réalisée à une température comprise entre 500 et 700 °C et, de préférence, comprise entre 500 et 600 °C. et en ce que la réaction de décomposition est conduite de façon à ce que la phase gazeuse dans le réacteur de décomposition comporte toujours en tout point, au moins environ 15 % en volume de silane. Il est à noter que la décomposition est de préférence effectuée sur un courant gazeux de silane pur.

Il a été trouvé que l'on pouvait encore améliorer la densité de la poudre obtenue si, réalisant la décomposition thermique du silane dans la gamme des températures mentionnées ci-dessus, la réaction de décomposition thermique était conduite de façon que la phase gazeuse dans le réacteur comporte toujours et en tous points au moins environ 15 %, en volume, de silane. En effet, lorsqu'on opère dans ces conditions, on a trouvé que la décomposition du silane s'effectuait, au moins en partie, sur des grains de silicium préalablement obtenus et que ces grains grossissaient du fait du dépôt progressif du silicium sur leur surface extérieure. Dans ces conditions, on a obtenu de la poudre de silicium dont la densité était comprise entre 0,8 et 1,2.

La présente invention concerne donc également en tant que matériau nouveau un silicium de haute pureté non amorphe aux rayons X, caractérisé en ce qu'il présente une densité comprise entre 0,8 et 1,2 ; elle concerne également un procédé de préparation dudit silicium, caractérisé en ce que les grains de silicium sont obtenus par décomposition du silane à une température comprise entre 500 et 700 °C, de préférence entre 500 et 600 °C, dans un réacteur dont la phase gazeuse comporte toujours au moins 15 %, en volume, de silane.

Les techniques utilisables pour mettre en œuvre cette dernière condition expérimentale sont très variées ; on peut, par exemple, opérer dans un réacteur tubulaire alimenté à l'une de ses extrémités par du silane et convenablement chauffé sur au moins une partie de sa longueur, la longueur de la zone chauffée étant choisie de façon qu'au plus 85 % du silane entrant soient décomposés dans ladite zone.

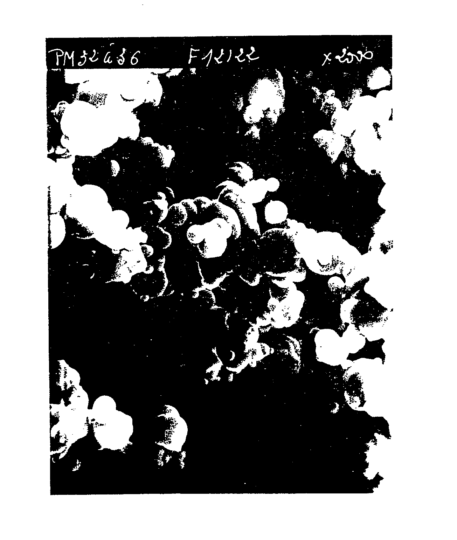

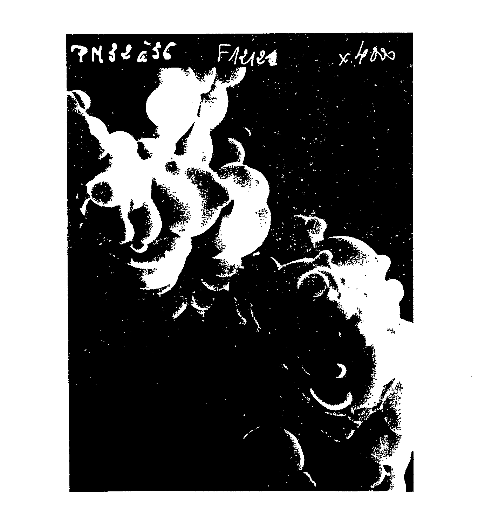

La poudre de silicium de l'invention n'est pas amorphe aux rayons X. Plus précisément, c'est une poudre dont la majorité du silicium est sous forme polycristalline. De plus, la surface spécifique de la poudre est généralement comprise entre 1 et 2 m²/g. Par ailleurs, la poudre est constituée de particules sphériques ou de silicium de diamètre moyen compris entre environ 2 et 5 microns et éventuellement agglomérés dans des amas de l'ordre de 50 microns ainsi que le montrent les photographies données aux figures 1 et 2 prises au microscope électronique à balayage.

Les exemples non limitatifs suivants illustrent l'invention.

## Exemple 1

On utilise un réacteur en acier inoxydable revêtu intérieurement de quartz ; la longueur de ce réacteur est de 900 mm, son diamètre est de 100 mm ; le réacteur est chauffé par un four tubulaire à résistance sur une longueur d'environ 235 mm ; le silane pur est injecté à l'une des extrémités du réacteur, le gaz restant et le silicium produit sont récupérés à l'autre extrémité du réacteur.

2

**0 100 268**

Les résultats sont rassemblés dans le tableau ci-après ; dans ce tableau, on a indiqué :
le débit d'entrée du silane (mesuré dans des conditions normales) en cm³/min,
la température du four (T),
le pourcentage de silane restant dans les gaz sortant du réacteur,
la densité du silicium récupéré.

| DEBIT DE SILANE cm³/min | T °C | % SILANE | DENSITE DU SILICIUM |
|---|---|---|---|
| 600 | 750 | 5 | 0,3 |
| 600 | 550 | 21 | 0,75 |
| 1000 | 550 | 29 | 1 |
| 1000 | 490 | 55 | 0,4 |

## Exemple 2

On utilise un réacteur en acier inoxydable ; la longueur chauffée de ce réacteur est 1 200 mm ; son diamètre est 430 mm ; le silane pur est injecté à l'une des extrémités du réacteur, le gaz restant et le silicium produit sont récupérés à l'autre extrémité du réacteur.

Les résultats obtenus sont les suivants :
débit d'entrée du silane (mesuré dans des conditions normales) : 4 085 cm³/min,
température du four : 550 °C,
pourcentage de silane restant dans les gaz sortant du réacteur : 35 %,
densité du silicium récupéré : 0,80.

## Exemple 3

On utilise un réacteur en quartz ; la longueur chauffée de ce réacteur est 1 200 mm ; son diamètre est 430 mm ; le silane pur est injecté à l'une des extrémités du réacteur, le gaz restant et le silicium produit sont récupérés à l'autre extrémité du réacteur.

Les résultats obtenus sont les suivants :
débit d'entrée du silane (mesuré dans des conditions normales) : 4 085 cm³/min,
température du four : 600 °C,
pourcentage de silane restant dans les gaz sortant du réacteur : 30 %,
densité du silicium récupéré : 0,70.

## Revendications

1. Poudre de silicium de haute pureté non amorphe aux rayons X caractérisée en ce qu'elle présente une densité supérieure à environ 0,6 et de préférence comprise entre 0,8 et 1,2.

2. Procédé pour la préparation de poudre de silicium non amorphe aux rayons X de densité supérieure à 0,6 par décomposition thermique du silane caractérisé en ce que ladite décomposition est réalisée à une température comprise entre 500 et 700 °C et de préférence comprise entre 500 et 600 °C, et en ce que la réaction de décomposition est conduite de façon à ce que la phase gazeuse dans le réacteur de décomposition comporte toujours et en tout point au moins environ 15 % en volume, de silane.

## Claims

1. High-purity silicon powder, nonamorphous to X-rays, characterised in that it has a relative density greater than approximately 0.6 and preferably between 0.8 and 1.2.

2. A process for the preparation of silicon powder, nonamorphous to X-rays, of relative density greater than 0.6, by thermal decomposition of silane, characterised in that the said decomposition is effected at a temperature of between 500 and 700 °C and preferably between 500 and 600 °C, and the decomposition reaction is conducted so that the gaseous phase in the decomposition reactor contains, at all times and at all points, at least approximately 15 % by volume of silane.

**Patentansprüche**

1. Röntgenamorphes Siliziumpulver hoher Reinheit dadurch gekennzeichnet, daß es eine Dichte über 0,6, vorzugsweise zwischen 0,8 und 1,2 besitzt.

2. Verfahren zur Herstellung von röntgenamorphem Siliziumpulver hoher Reinheit mit einer Dichte über 0,6 durch thermische Zersetzung von Silan, dadurch gekennzeichnet, daß die Zersetzung bei einer Temperatur zwischen 500 und 700 °C, vorzugsweise zwischen 500 und 600 °C, in der Weise durchgeführt wird, daß die Gasphase im Zersetzungsreaktor zu jedem Zeitpunkt und überall mindestens 15 Vol.-% Silan enthält.